# EUROPEAN PATENT SPECIFICATION

(11) **EP 3 756 968 B1**
(45) Date of publication and mention of the grant of the patent: **11.01.2023**
(21) Application number: 20020300.8
(22) Date of filing: 25.06.2020
(51) Int. Cl.: B61F 5/02

(54) **RAIL VEHICLE OR LOCOMOTIVE WITH A PULL-PUSH ROD FOR THE TRANSFER OF LONGITUDINAL FORCES BETWEEN THE BOGIE AND THE BODY OF THE RAIL VEHICLE OR LOCOMOTIVE**
SCHIENENFAHRZEUG ODER LOKOMOTIVE MIT EINER ZUG-SCHUB-STANGE ZUR ÜBERTRAGUNG VON LÄNGSKRÄFTEN ZWISCHEN DEM DREHGESTELL UND DEM WAGENKASTEN DES SCHIENENFAHRZEUGS ODER DER LOKOMOTIVE
VÉHICULE FERROVIAIRE OU LOCOMOTIVE MUNI D'UNE TIGE DE TYPE POUSSER-TIRER POUR LE TRANSFERT DE FORCES LONGITUDINALES ENTRE LE BOGIE ET LA CARROSSERIE DU VÉHICULE FERROVIAIRE OU DE LA LOCOMOTIVE

(30) Priority: 26.06.2019 CZ 20190419
(43) Date of publication of application: 30.12.2020
(73) Proprietor: Skoda Transportation, a.s., 301 00 Pilsen (CZ)
(72) Inventor: Spalek, Petr, 32300 Plzen, Bolevec (CZ); Bohuslav, Václav, 32300 Plzen, Bolevec (CZ)
(74) Representative: Lorenc, Lukas

(56) References cited:
- DE-A1- 2 929 927
- DE-A1- 19 810 697
- DE-B1- 2 434 584
- GB-A- 631 354
- US-A- 4 562 775

## Description

### Field of the invention

The invention is related to the field of rail vehicles, specifically a rail vehicle or locomotive with pull-push rods for transfer of longitudinal forces between the bogie and the body of said rail vehicle or locomotive A locomotive of the aforesaid kind is known from prior art document DE 24 34 584 B1 for example.

### Background of the Invention

At present, a straight pull-push rod is very often used on rail vehicles to transfer longitudinal pulling forces in one direction of travel of the vehicle and pushing forces in the opposite direction of travel of the vehicle, between the bogie and the vehicle body. These are both traction and braking forces. The arrangement of the transmission of longitudinal forces by means of an existing pull-push rod is very simple from the design point of view, and at the same time, it is very advantageous from the kinematic point of view, because the tilt of the pull-push rod allows achieving the so-called mechanical optimum, or from a professional point of view the virtual height of transmission of longitudinal forces from the bogie to the vehicle body, at the height of the rail surface, or very low above the rail surface, depending on the compression level of the vehicle suspension system.

However, the arrangement of the transmission of longitudinal forces by means of a straight, even pull-push rod restricts the possibilities of arranging more bogies under the vehicle body, in fact only to 2 bogies when the wheelsets of a vehicle are arranged as 4 wheelsets and 2 bogies, because the standard design of pull-push rods are straight rods in the axis of the longitudinal axis of the vehicle / locomotive, such as in the design in file CZ 283 614. In the case of straight pull-push rods it is necessary to keep the minimum spacing between the individual bogies so that the straight rods will fit into this spacing without any collisions. This in practice eliminated the use of 3 or 4 bodies under the vehicle body with transmission of longitudinal forces by means of a pull-push rod.

Known pull-push rod is articulated at one end to the bogie frame headstock and at the other end to a pin on the main frame-body of the vehicle in the longitudinal axis. Both joints are located very low above the surface of the rail. The longitudinal forces between the bogie and the vehicle body are then transferred by means of the rod.

### Summary of the invention

The above disadvantage is eliminated by a vehicle according to independent claim 1 resp. independent claim 2.

The shaping of the structural components of the pull-push rod and their mutual combination makes it possible to use the basic bogie of a rail vehicle immediately next to another identical bogie under the body of the vehicle or locomotive. Thus, it is possible to use several identical bogies under the body of a vehicle or locomotive and to achieve a vehicle arrangement with a total of 6 wheelsets arranged into 3 bogies, or a vehicle with a total of 8 wheelsets arranged into 4 bogies.

In the first structural design, the pull-push rod is made with one structural component in the shape of a flattened plate with an opening. This flattened plate is curved along the longitudinal axis. The second structural component of the pull-push rod is formed as a simple bar which is curved along the transverse axis and is threaded through an opening in the flattened plate.

In the second structural design, both structural components of the pull-push rod are made with identical shape so that they are made as curved simple bars that are curved along the longitudinal axis. The curved simple bars are in shape of an arc deflecting to the side away from the longitudinal axis. Both structural components are installed so that they pass each other spatially in the plan and front view at the same time, due to the curvature.

The advantage of the design is just the curved shape, or the opening in one pull-push rod, which allows to arrange both vehicle bogies that are close to each other so that it is possible to place 3 or 4 bogies very close to each other under the vehicle.

The pull-push rod is articulated at one end of the structural components to the bogie frame headstock, low above the rail surface, and at the other end of the structural components also articulated to a pin arranged on the main frame-body of the vehicle or locomotive in the longitudinal axis of the vehicle. This second articulated joint of the structural components of the pull-push rod is located slightly higher above the rail surface than the articulated joint of the structural components of the pull-push rod with the bogie frame. Through the pull-push rod thus positioned between two joints, one on the bogie frame of the vehicle or locomotive and the other on the main frame-body of the vehicle or locomotive, the transfer of traction and compression forces between the body of vehicle or locomotive and the vehicle bogie is provided by means of the pull-push rod.

### Brief description of the drawings

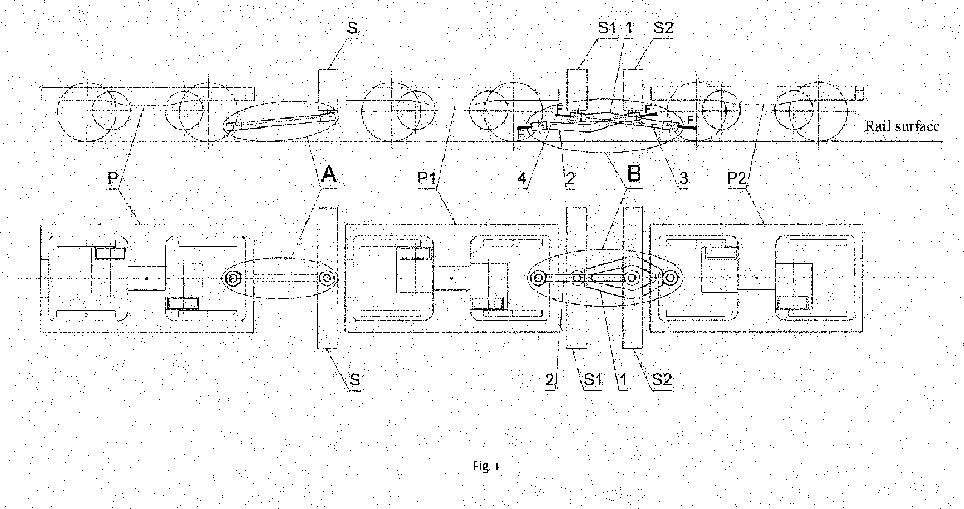

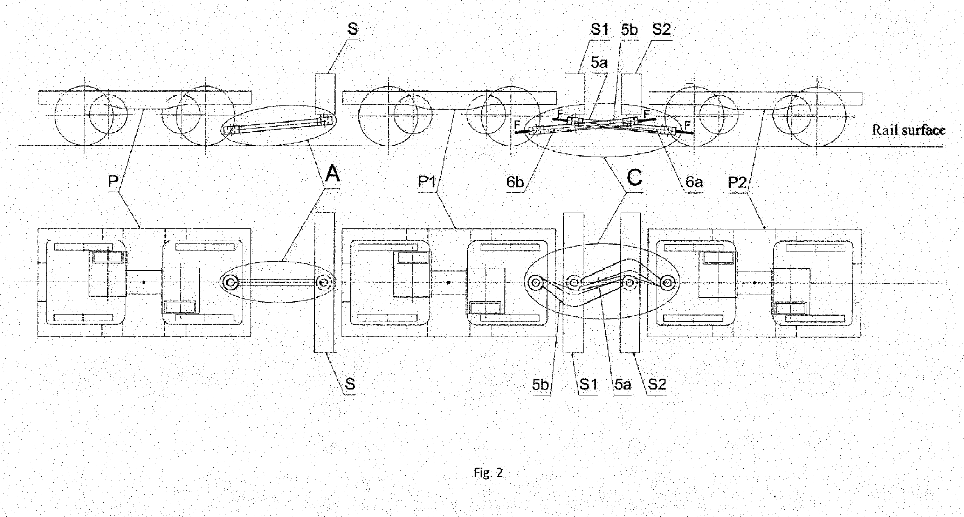

The invention will be further illustrated on the attached drawings, where Fig. 1 illustrates the plan and side view of the pull-push rod arranged between the bogie and the locomotive body in embodiment A as standard straight rod, and in embodiment B with the first structural component in the shape of a simple bar curved along the transversal axis and threaded through the opening in the flattened plate, and Fig. 2 illustrates the plan and side view of the pull-push rod arranged between the bogie and locomotive body in embodiment A - standard straight rod, and in embodiment B - with both structural components of the pull-push rod are made with identical shape so that they are curved along the longitudinal axis.

### Examples of invention embodiment

### Example 1

The structural design illustrated in Fig. 1, is based on making the first structural component i.e the first pull-push rod 1 so that it is made as flattened plate formed as a loop with an opening. This plate is curved, wherein the second structural component - the second pull-push rod 2 is formed as a simple bar which is curved in a vertical plane including the longitudinal axis of rail vehicle and passes through the opening in the loop.

The mutual curves of the flattened plate and the simple bar and the design of the opening in the flattened plate are so small that under loading, the stresses in the material of both parts are so low that they are close to the stresses of a single beam. This design is a little heavier than the standard embodiment of a straight rod, this difference, however, is negligible within the mass balance of the entire vehicle / locomotive.

The flattened plate with the opening and the simple bar can be well dimensioned without excessive weight increase compared to the current design A.

Both structural components, i.e. the flattened plate and the curved simple bar are stressed along their longitudinal axes, in the first longitudinal axis 3 of the flattened plate and in the second longitudinal axis 4 of the simple bar.

In the case of the flattened plate i.e. the loop, under tensile loading in the direction F, there is a tendency to shrink, lengthen the opening in the loop and at the same time a tendency to straighten-shrink the curvature towards the longitudinal axis 3. In the case of the simple bar, under tensile loading, the simple bar is stressed so that there is a tendency to decrease its curvature towards the longitudinal axis 4. In the case of the flattened plate, under pressure loading, wherein the compressive loading acts against the direction F, the flattened plate is stressed so that there is a tendency to enlarge / shorten the opening in the flattened plate, and at the same time a tendency to increase the curvature of the flattened plate - increase the curvature towards the longitudinal axis 3. In the case of the simple bar, under pressure loading, the simple bar is stressed so that there is a tendency of its further bending-to increase its curvature towards the longitudinal axis 4.

The first and second pull-push rods 1, 2 of design B are articulated at one end to a headstock of a second and first bogie P2 and P3, respectively, low above the rail surface, and at the other end also articulated to a pin arranged on the main frame-body S1, S2, respectively, of the vehicle or locomotive in the longitudinal axis of the vehicle, that is, to the body of the vehicle or locomotive. This second articulated joint of the pull-push rod of design B is located slightly higher above the rail surface than the articulated joint of the first and second pull-push rods 1, 2 of design B with the bogie frame. Through the pull-push rods 1, 2 thus positioned between two joints, one on the bogie frame of the vehicle or locomotive and the other on the main frame-body of the vehicle or locomotive, the transfer of traction and compression forces between the body of vehicle and the vehicle or locomotive bogie is provided by means of the pull-push rod of design B.

### Example 2

The structural design C of the pull-push rods, illustrated in Fig. 2, is made of two structura components - pull-push rods 5a, 5b of identical shape, which are made as curved simple bars having curved longitudinal axes 6a, 6b, respectively. Both structural components are installed so that their convex curvatures oppose each other spatially in the plan view. The mutual curvatures of the components are so small that under loading the stresses in the material of both components are so low, close to the stresses of a simple beam, and both parts, without excessive weight increase compared to the current design A, the curved simple bars can be well strength-dimensioned so that the components can be made from common materials, such as steel casting or ductile iron. Both components are stressed in their longitudinal axis 6a, 6b, respectively. In the case of tensile loading with force in the direction F, the structural components - curved simple bars 5a, 5b are stressed so that there is a tendency to straighten the components-decrease the curvature towards the longitudinal axis 6a, 6b. In case of pressure loading with force against the direction of arrow F, the components are stressed so that there is a tendency to further bend the components-increase the curvature towards the longitudinal axis 6a, 6b.

The first and second pull-push rods 5a, 5b are articulated at one end of the to the headstock of a second and first bogies P2, P1, respectively, low above the rail surface, and at the other end also articulated to a pin arranged on the main frame-body S1, S2, respectively, of the vehicle or locomotive in the longitudinal axis of the vehicle. This second articulated joint of the pull-push rods is located slightly higher above the rail surface than the articulated joint of the pull-push rods with the bogie frame. Through the pull-push rods thus positioned between two joints, one on the bogie P1, P2 of the vehicle and the other on the main frame-body S1, S2 of the vehicle or locomotive, the transfer of traction and compression forces between the body S1, S2 of vehicle and the vehicle or locomotive bogie P1, P2 is provided by means of the pull-push rods.

The structural components - the pull-push rods are made as a casting, welded part, forged part, part made of fiber, glass, carbon composites or are assembled of several parts and other possible designs.

### Industrial applicability

Industrial applicability is with rail vehicles in particular, which solve the transfer of longitudinal braking and traction forces between the body and the bogie by means of the so-called pull-push rod. This is currently a very widespread concept of longitudinal force transfer, used in the vast majority of rail vehicles, very widespread with locomotives. The invention allows to maintain the concept of transfer of longitudinal forces, and at the same time the use of more than 2 bogies, 3 or 4 bogies, under one vehicle body or a locomotive. This is currently desirable, given the increasing trend in train tonnage, especially in freight trains, since the conventional 4-axle locomotives with two bogies are no longer able to cope with such requirements and there is a need to acquire vehicles or locomotives with more than 4 wheelsets, which can handle the abovementioned increasing needs.

## Claims

1. A rail vehicle with a first pull-push rod (1) and a second pull-push rod (2), whereby the second pull-push rod (2) is articulated at one end to a headstock of a first bogie (P1) and at the other end to a pin on the main frame-body (S2) of the rail vehicle or locomotive in the longitudinal axis so as to transfer longitudinal forces between the first bogie (P1) and the body (S2) of the rail vehicle, whereby the first pull-push rod (1) is articulated at one end to a headstock of a second bogie (P2) and at the other end to a pin on the main frame-body (S1) of the rail vehicle or locomotive in the longitudinal axis so as to transfer longitudinal forces between the second bogie (P2) and the body (S1) of the rail vehicle or locomotive, wherein the both ends of the both pull-push rods lie in a common vertical plane including the longitudinal axis, **characterized in that** the first and second pull-push rods (1, 2) intersect in a projection into the common vertical plane, the second pull-push rod (2) being performed as a simple curved bar contained in the common vertical plane, wherein the first pull-push rod (1) has a shape of a loop with an opening, wherein a surface in which the loop and the opening lie is curved about a transversal axis perpendicular to the common vertical plane, and wherein the second pull-push rod (2) passes through the opening of the loop.

2. A rail vehicle with a first pull-push rod (5a) and a second pull-push rod (5b), whereby the second pull-push rod (5b) is articulated at one end to a headstock of a first bogie (P1) and at the other end to a pin on the main frame-body (S2) of the rail vehicle or locomotive in the longitudinal axis so as to transfer longitudinal forces between the first bogie (P1) and the body (S2) of the rail vehicle, whereby the first pull-push rod (5a) is articulated at one end to a headstock of a second bogie (P2) and at the other end to a pin on the main frame-body (S1) of the rail vehicle or locomotive in the longitudinal axis so as to transfer longitudinal forces between the second bogie (P2) and the body (S1) of the rail vehicle or locomotive, wherein the both ends of the both pull-push rods lie in a common vertical plane including the longitudinal axis, **characterized in that** the first and second pull-push rods (5a, 5b) intersect in a projection into the common vertical plane, the first and second pull-push rods (5a, 5b) being performed as a simple curved bars, wherein the first pull-push rod (5a) and the second pull-push rod (5b) have identical shape and are each curved in a plane perpendicular to the vertical plane so that each of the pull-push rods (5a, 5b) includes convexity opposing the other pull-push rod (5b, 5a), wherein one end of each of the pull-push rods (5a, 5b) is, in projection into a horizontal plane, positioned in the convexity of the other pull-push rod (5a, 5b).

3. The rail vehicle according to claim 1 or 2, **characterized in that** the first pull-push rod (1; 5a) and the second pull-push rod (2; 5b) are made as a casting, welded part, forged part, part made of fiber, glass, carbon composites or assembled of several parts.

## Patentansprüche

1. Ein Schienenfahrzeug mit einer ersten Zugschubstange (1) und einer zweiten Zugschubstange (2), wobei die zweite Zugschubstange (2) an einem Ende zum Kopfstück des ersten Fahrgestells (P1) und an dem anderen Ende zu einem Zapfen am Hauptrahmenaufbau (S2) des Schienenfahrzeugs oder der Lokomotive in der Längsachse angegliedert sind, um Längskräfte zwischen dem ersten Fahrgestell (P1) und dem Aufbau (S2) des Schienenfahrzeugs zu übertragen, wobei die erste Zugschubstange (1) an einem Ende zum Kopfstück des zweiten Fahrgestells (P2) and am anderen Ende zum Zapfen am Hauptrahmenaufbau (S1) des Schienenfahrzeuges oder der Lokomotive in der Längsachse angegliedert ist, um Längskräfte zwischen dem zweiten Fahrgestell (P2) und dem Aufbau (S1) des Schienenfahrzeuges oder der Lokomotive zu übertragen, worin die beiden Enden der beiden Zugschubstangen in einer gemeinsamen vertikalen Ebene einschließlich der Längsachse liegen, **charakterisiert dadurch**, dass sich die erste und die zweite Zugschubstange (1, 2) in der Projektion in einer gemeinsamen vertikalen Ebene schneiden, wobei die zweite Zugschubstange ein in der gemeinsamen vertikalen Ebene enthaltener eingebogener Staab ist, worin die erste Zugschubstange (1) die Form einer Schlinge mit einer Öffnung hat, worin die Fläche, wo die Schlinge und die Öffnung liegen, um eine transversale, zur gemeinsamen vertikalen Ebene senkrechten Achse gebogen wird, und worin die zweite Zugschubstange (2) durch die Öffnung der Schlinge läuft.

2. Ein Schienenfahrzeug mit einer ersten Zugschubstange (5a) and mit einer zweiten Zugschubstange (5b), wobei die zweite Zugschubstange (5b) an einem Ende zum Kopfstück des ersten Fahrgestells (P1) und an dem anderen Ende zum Zapfen des zweiten Hauptrahmenaufbaus (S2) des Schienenfahrzeuges oder der Lokomotive in der Längsachse angegliedert ist, um Längskräfte zwischen dem ersten Fahrgestell (P1) und dem Aufbau (S2) des Schienenfahrzeuges zu übertragen, wobei die erste Zugschubstange (5a) an einem Ende zum Kopfstück des zweiten Fahrgestells (P2) und an em anderen Ende zum Zapfen des Hauptrahmenaufbaus (S1) des Schienenfahrzeuges oder der Lokomotive in der Längsachse angegliedert ist, um Längskräfte zwischen dem zweiten Fahrgestell (P2) und dem Aufbau (S1) des Schienenfahrzeuges oder der Lokomotive zu übertragen, worin die beiden Enden der beiden Zugschubstangen in einer gemeinsamen vertikalen Ebene einschließlich der Längsachse liegen, **charakterisiert dadurch**, dass sich die erste und die zweite Zugschubstange (5a, 5b) in der Projektion in einer gemeinsamen vertikalen Ebene schneiden, wobei die erste und die zweite Zugschubstange (5a, 5b) einfache gebogene Stäbe sind, worin die erste Zugschubstange (5a) und die zweite Zugschubstange (5b) eine identische Form haben und beide in einer Ebene, die zur vertikalen Ebene senkrecht ist, gebogen sind, sodass jede von den Zugschubstangen (5a, 5b) der anderen Zugschubstange (5a, 5b) gegenüberliegende Konvexität enthält, worin ein Ende jeder von den Zugschubstangen (5a, 5b), in der Projektion auf eine horizontale Ebene, in der Konvexität der anderen Zugschubstange (5a, 5b) liegt.

3. Das Schienenfahrzeug laut Anspruch 1 oder 2, **charakterisiert dadurch**, dass die erste Zugschubstange (1; 5a) und die zweite Zugschubstange (2; 5b) verfertigt sind als ein Abguss, geschweißter Teil, Schmiedestück, vom Glas-, Kohlenfaserkomposita oder aus mehreren Bestandteilen verfertigter Teil.

## Revendications

1. Véhicule ferroviaire avec une première barre de traction et de poussée (1) et une seconde barre de traction et de poussée (2), dans lequel la seconde barre de traction et de poussée (2) est articulée à une extrémité à une poupée fixe d'un premier bogie (P1) et à l'autre extrémité à un axe sur la caisse du châssis principale (S2) du véhicule ferroviaire ou de la locomotive dans l'axe longitudinal de manière à transférer les forces longitudinales entre le premier bogie (P1) et la caisse (S2) du véhicule ferroviaire, dans lequel la première barre de traction et de poussée (1) est articulée à une extrémité à une poupée fixe d'un deuxième bogie (P2) et à l'autre extrémité à un axe sur la caisse du châssis principale (S1) du véhicule ferroviaire ou de la locomotive dans l'axe longitudinal de manière à transférer les forces longitudinales entre le deuxième bogie (P2) et la caisse (S1) du véhicule ferroviaire ou de la locomotive, dans lequel les deux extrémités des deux barres de traction et de poussée se trouvent dans un plan vertical commun comprenant l'axe longitudinal, **caractérisé en ce que** les première et seconde barres de traction et de poussée (1, 2) se croisent dans une projection dans le plan vertical commun, la seconde barre de traction et de poussée étant réalisée sous la forme d'une simple barre incurvée contenue dans le plan vertical commun, dans lequel la première barre de traction et de poussée (1) a la forme d'une boucle avec une ouverture, dans lequel une surface dans laquelle la boucle et l'ouverture se trouvent est incurvée autour d'un axe transversal perpendiculaire au plan vertical commun, et dans lequel la seconde barre de traction et de poussée (2) passe à travers l'ouverture de la boucle.

2. Véhicule ferroviaire avec une première barre de traction et de poussée (5a) et une seconde barre de traction et de poussée (5b), dans lequel la seconde barre de traction et de poussée (5b) est articulée à une extrémité sur une poupée fixe d'un premier bogie (P1) et à l'autre extrémité sur un axe de la caisse du châssis principale (S2) du véhicule ferroviaire ou de la locomotive dans l'axe longitudinal de manière à transférer les forces longitudinales entre le premier bogie (P1) et la caisse (S2) du véhicule ferroviaire, dans lequel la première barre de traction et de poussée (5a) est articulée à une extrémité à une poupée fixe d'un deuxième bogie (P2) et à l'autre extrémité à un axe sur la caisse du châssis principale (S1) du véhicule ferroviaire ou de la locomotive dans l'axe longitudinal de manière à transférer les forces longitudinales entre le deuxième bogie (P2) et la caisse (S1) du véhicule ferroviaire ou de la locomotive, dans lequel les deux extrémités des deux barres de traction et de poussée se trouvent dans un plan vertical commun comprenant l'axe longitudinal, **caractérisé en ce que** les première et seconde barres de traction et de poussée (5a, 5b) se croisent en projection dans le plan vertical commun, les première et seconde barres de traction et de poussée (5a, 5b) étant des barres courbes simples, dans lesquelles la première barre de traction et de poussée (5a) et la seconde barre de traction et de poussée (5b) ont une forme identique et sont chacune courbées dans un plan perpendiculaire au plan vertical de sorte que chacune des barres de traction et de poussée (5a, 5b) présente une convexité opposée à l'autre barre de traction et de poussée (5b, 5a), dans laquelle une extrémité de chacune des barres de traction et de poussée (5a, 5b) est, en projection dans un plan horizontal, positionnée dans la convexité de l'autre barre de traction et de poussée (5a, 5b).

3. Véhicule ferroviaire suivant la revendication 1 ou 2, **caractérisé en ce que** la première barre de traction et de poussée (1; 5a) et la seconde barre de traction et de poussée (2 ; 5b) sont réalisées sous la forme d'une pièce moulée, d'une pièce soudée, d'une pièce forgée, d'une pièce en fibre, en verre, en composite de carbone ou d'un assemblage de plusieurs pièces.
